# EUROPEAN PATENT APPLICATION

(11) **EP 2 894 349 A1**
(43) Date of publication of application: **15.07.2015**
(21) Application number: 14151067.7
(22) Date of filing: 14.01.2014
(51) Int. Cl.: F04D 25/08, F04D 29/26

(54) **Fan assembly for air-ventilation-device of traction-motor**

(71) Applicant: ABB Technology AG, 8050 Zürich (CH)
(72) Inventor: BODINI, Piero, 20010 Vittuone (Milano) (IT); MOIOLI, Giuseppe, 20037 Paderno Dugnano (Milano) (IT)
(74) Representative: Candito, Rocco

(57) **Abstract**

A fan-assembly (1) for an air-ventilation-device (2) of a traction-motor (3) comprises:
- a hub-body (4) suitable for being shrunk on a shaft (5) of the traction-motor (3);
- an impeller-body (6) having an inner part (7) which is adapted to be connected to the hub-body (4)and blade portions (8) protruding from the inner part (7),
- connecting means (9) for connecting the impeller-body (6) to the hub-body (4). The connecting means (9) are defined by a first connecting portion (10) integrally obtained on the hub-body (4) and a second connecting portion (11) integrally obtained on the impeller-body (6). The first connecting portion (10) and the second connecting portion (11) are configured for mutually coupling through mechanical interference.

## Description

The present disclosure relates to a fan-assembly suitable for an air-ventilation-device of an electric traction-motor.

In the technical field of rail vehicles, electric traction-motors are used for the propulsion, for example, of locomotives. An electric traction-motor of the so-called "self-ventilated" type comprises an air ventilation circuit which includes fan-unit. The fan-unit is directly mounted on a shaft which supports, and is rotated by, a rotor interacting with a stator of the traction-motor. The fan-unit comprises a hub which is fixed on the shaft of the traction-motor, and an impeller which is fixed to the hub through a plurality of steel bolts. When the shaft rotates, also the impeller is moved thus cooling the traction-motor.

Such a traction-motor is subjected to very heavy operative conditions and loads, and often is required to work to a full power modality for a long time, so that very high internal stress and temperatures are reached.

Since such a traction-motor is to be fit in a narrow space within a locomotive bogie, also a compact dimension for the fan assembly is therefore required, thus implying very little dimensions of openings and ducts for the fresh ventilation air. As a result, due to such small inner motor and rotor chambers, very strict operative conditions are demanded to the fan unit that is therefore affected by considerable stress values which could compromise the fan and system integrity. In particular, the above-mentioned steel bolts are stressed to their mechanical resistance and fatigue limits, thus undergoing an immediate breakage or, in any case, a yield-condition which implies a loosening of the assembled parts. As a result, vibrations and in general a bad functioning of the fan-unit is experienced. Furthermore, the presence of steel bolts - which fix a front portion of the hub to the impeller - entails a not very aerodynamically optimized shape for the air flow. In other words, the hub-front portion together with the bolts partially block the air flow and therefore somehow affect the ventilation action of the latter.

It would be desirable to improve the known fan assemblies, in particular by providing a technical solution having increased aerodynamics performances and mechanical reliability which is able to better overcome the system harmful conditions described above thus prolonging the operative life of the fan and therefore of the traction-motor.

This is achieved by a fan-assembly as defined in the appended claims and described herein. According to the invention, there is provided a fan-assembly suitable for an air-ventilation-device of a traction-motor, the fan-assembly comprising:
- a hub-body suitable for being shrunk on a shaft of said traction-motor;
- an impeller-body having an inner part, which is adapted to be connected to said hub-body, and blade portions protruding from said inner part,
- connecting means for connecting said impeller-body to said hub-body
CHARACTERISED IN THAT
said connecting means are defined by a first connecting portion integrally obtained on said hub-body and a second connecting portion integrally obtained on said impeller-body, said first connecting portion and said second connecting portion being configured for mutually coupling through mechanical interference.

The present disclosure encompasses also an air-ventilation-device comprising such a fan-assembly and a traction-motor comprising such an air-ventilation-device.

Characteristics and advantages of the present disclosure will result from the description, drawings and from claims.

The present disclosure can be better understood and implemented with reference to the attached drawings that illustrate an embodiment thereof by way of a non-limiting example, in which:

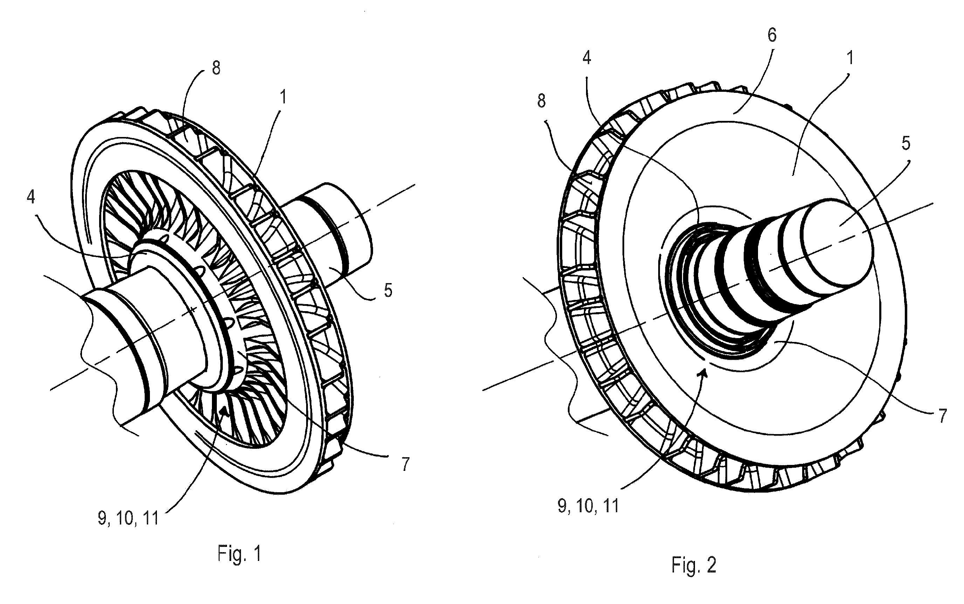

Figures 1 and 2 are two different perspective views of a fan assembly according to the invention;

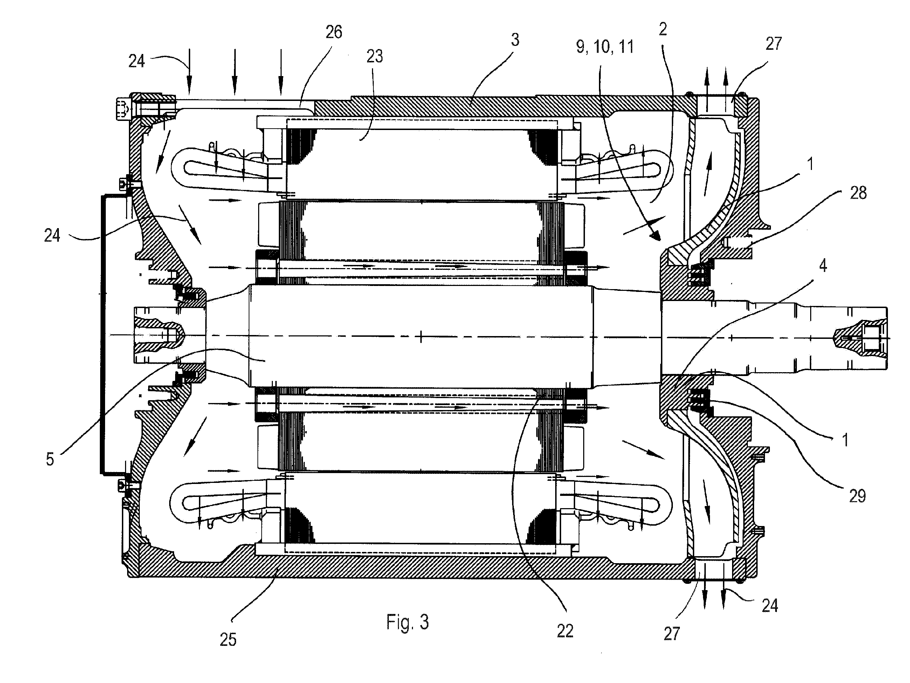

Figure 3 is an axial cross-section of a traction-motor including the fan-assembly of the invention;

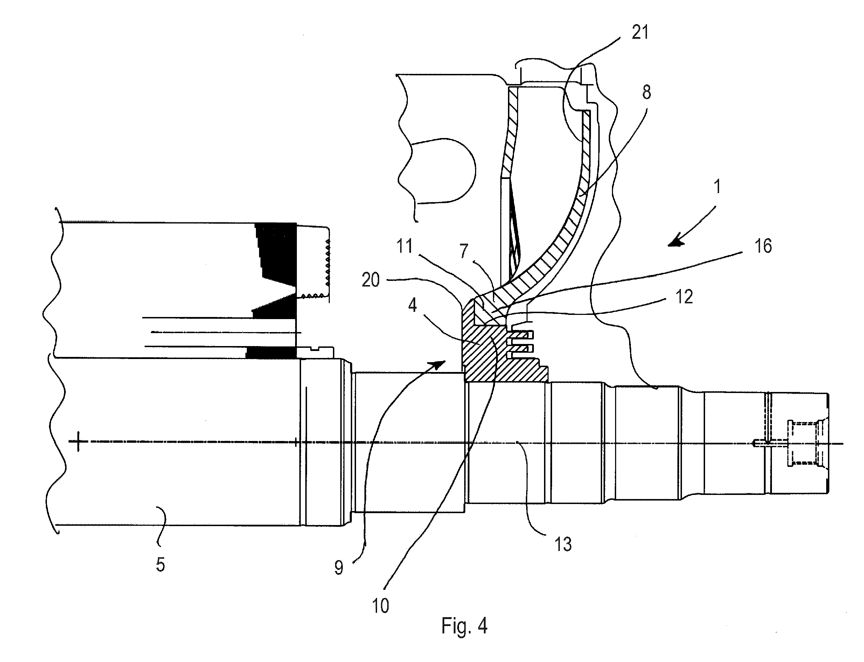

Figure 4 is enlarged detail of Figure 3, showing an impeller-body and a hub-body of the fan-assembly, coupled with one other and with a shaft of the traction-motor;

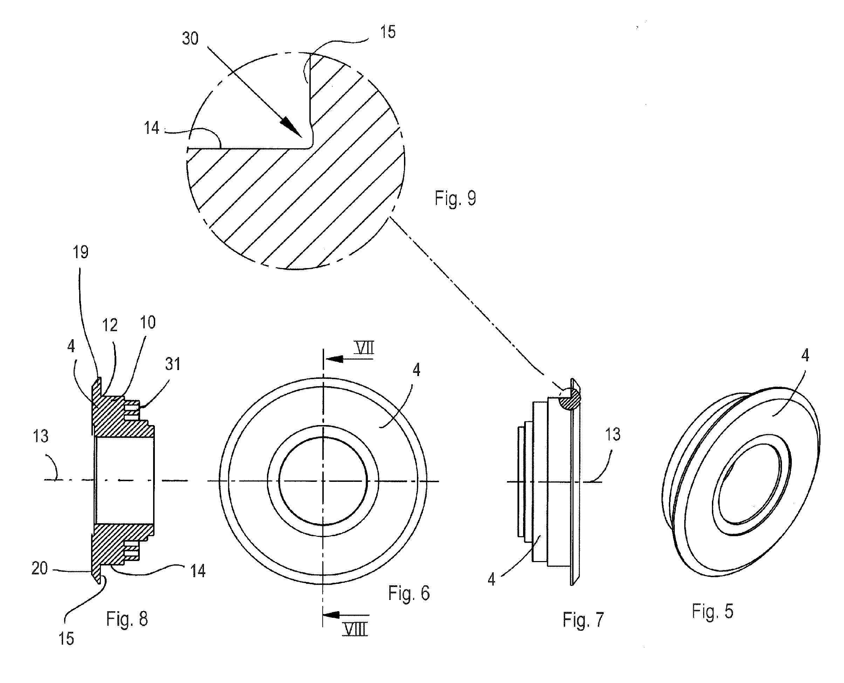

Figures 5, 6 and 7 are different views of the hub-body of the fan-assembly of the invention;
Figure 8 is a cross-section view taken along the plane VIII-VIII in Figure 6;
Figure 9 is enlarged detail of Figure 7;

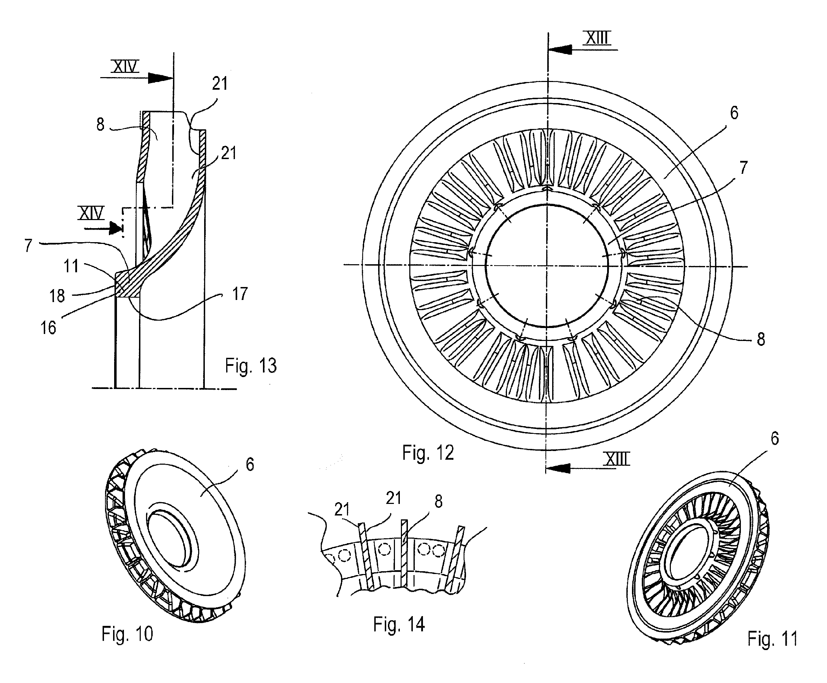

Figures 10, 11 and 12 are different views of the impeller-body of the fan-assembly of the invention;
Figure 13 is a cross-section view taken along the plane XIII-XIII in Figure 12;
Figure 14 is a fragmentary cross-section view taken along the plane XIV-XIV in Figure 13.

With reference to the attached Figures, a fan-assembly 1 is shown which is, in particular but in a non-limitative way, suitable to be included in an air-ventilation-device 2 of an electric traction motor 3 for rail vehicles such as locomotives.

The traction-motor 3 comprises a housing 25 which encloses a stator core 23 and a rotor core 22 and protects them from the external environment. The rotor core 22 is supported by a shaft 5 which is in turn pivotally supported, at both ends, by suitable bearing elements. The fan-assembly 1 comprises a hub-body 4, adapted to be mounted by shrink fit on the shaft 5, and an impeller-body 6 adapted to be connected to the hub body 4 by connecting means 9 better described later on.

The rotor core 22 of the traction-motor 3, mounted on the shaft 5, cooperates with the stator core 23 in order to rotate the shaft 5. The shaft 5, when rotated by the rotor core 22, drags into rotation the fan-assembly 1 which operates for cooling through air-ventilation the whole traction-motor 3. Therefore, the fan assembly 1 is directly driven by a shaft 5 of the traction-motor 3. Due to this configuration, a traction motor provided with such an air-ventilation-device 2 can be referred to as a "self-ventilated" traction-motor 3.

The hub-body 4 is configured for being mounted on the shaft 5 in such a way as to result axially and rotatably fixed to it.

In particular, the hub-body 4 is adapted for being shrunk on the shaft 5. The impeller-body 6 has an inner part 7 adapted to be firmly connected to the hub-body 4. The impeller body 6 comprises blades 8 protruding radially from the inner part 7. The blades 8 are provided with air-deviating-surfaces 21 which, during operation, make an air-flow 24 circulate within the traction motor 3. In particular the air-flow is intaken into the traction motor 3 by the rotating fan-assembly 1. The air flow 24 enters the motor-housing 25 through an inlet-opening 26, runs along a plurality of ducts and chambers between the stator core 23 and the rotor core 22, thus cooling the latter, and finally is radially and centrifugally expelled by the blades 8 outside through suitable outlet openings 27.

At each end of the shaft 5, suitable sealing-covering elements can be provided for preventing undesired objects, particles and dirt from entering the interior of the traction motor 3. In particular, at the end proximate to the fan-assembly 1, a motor shield 28 is also connected to the housing 25 for protecting the impeller-body 6 and the hub body 4 from the external environment. In particular, for this purpose, also a labyrinth-seal-ring 29 is defined between the stationary motor shield 28 and the rotatable hub-body 4. The hub-body 4 comprises a labyrinth-protrusion 31 which faces, in a contactless manner, a labyrinth portion of the seal ring 29 assembled into the motor shield.

A more detailed description of the impeller body 6 and hub-body 4, particularly of the connecting means, 9 follows.

The connecting means 9 are defined by a first connecting portion 10, integrally obtained on the hub-body 4, and a second connecting portion 11, integrally obtained on the impeller-body 6. The first connecting portion 10 and the second connecting portion 11 are configured for mutually coupling through mechanical interference. The first connecting portion 10 and the second connecting portion 11 are so configured as to make any screw-elements, nuts, or other separate fixing means superfluous and unnecessary for the reciprocal coupling of the impeller-body 6 with the hub-body 4, differently from the prior art fan-assemblies. The first connecting portion 10 and the second connecting portion 11 are structurally so configured as to make possible a shrink fitting-on-coupling of the impeller-body 6 with the hub-body 4. Owing to the particular geometrical shape and well-designed dimensions of the first 10 and second 11 connecting portions, and to their specific materials, as detailed in the following, improved mechanical resistance and cooling performances for the fan-assembly 1 are achieved.

The optimum geometrical and dimensional configuration and the specific materials of the fan-assembly 1 have been found through many laborious mechanical trials, such as fatigue and dynamic-load tests, at different temperatures (ranging from a minimum ambient temperature of about -20°C which the traction motor must be guaranteed, to higher temperature values even more than 100 °C), at different speed and effort conditions of the traction motor, and through accurate FEM (Finite elements method) and CFD (Computational Fluid Dynamic) analyses.

The first connecting portion 10 is made of a first material and the second connecting portion 11 is made of a second material different from the first material.

The first and second materials are carefully chosen on the basis of their mechanical and thermal properties, i.e. by taking into account their mechanical resistance to the dynamic loads and their thermal-expansion-coefficients. More precisely, advantageously, the first material has a first thermal-expansion-coefficient lower than a second thermal-expansion-coefficient of the second material. Furthermore, the first thermal-expansion-coefficient of the first material is greater than a third thermal-expansion-coefficient of a third material of the shaft 5.

The above mentioned coefficients are linear thermal expansion parameters, peculiar of metallic materials, which vary according to the temperature.

In particular, the impeller-body 6 is an aluminium alloy-casting-impeller 6, whereas the hub-body 4 is made of corrosion resistant steel. Excellent performances of the fan assembly 1 are achieved by choosing for the first material (i.e. for the hub-body 4) a X1NiCrMoCu25-20-5 corrosion resistant steel and for the second material (i.e. for the impeller body 6) an ALSi9MnMg aluminium alloy.

The corrosion resistant steel X1NiCrMoCu25-20-5 has a first thermal-expansion-coefficient value V1 ranging from about 15.8 [10-6/°K], corresponding to an operative-condition with a temperature of about 20 °C, to about 17.3 [10-6/°K] corresponding to an operative-condition with a temperature of about 500 °C.

The aluminium alloy ALSi9MnMg has a second thermal-expansion-coefficient value V2 ranging from about 20.5 [10-6/°K], corresponding to an operative-condition with a temperature of about 20 °C, to about 22.5 [10-6/°K] corresponding to an operative-condition with a temperature of about 300 °C.

The shaft 5 is made of a 42CrMo4 steel, and has a third thermal-expansion-coefficient value V3 ranging from about 11.5 [10-6/°K] corresponding to an operative-condition with a temperature of about 20 °C, to about 14 [10-6/°K] corresponding to an operative-condition with a temperature of about 600 °C. In other words, the thermal expansion value of the hub-body 4 material is positioned in the middle between the thermal expansion values of the materials of the impeller-body 6 and of the shaft 5 respectively. This choice, advantageously, implies a right physical condition which enables to successfully face the high load-stresses and thermal dilatations of the shaft 5, hub-body 4 and impeller-body 6, preserving the constrains of the system during the traction-motor operating condition.

In the following, the geometrical and dimensional configuration of mechanical coupling of the impeller-body 6 and of the hub-body 4 is described.

A circular-housing 12, obtained on the first connecting portion 10 of the hub-body 4, extends around an axis 13 of the hub-body 4 and is adapted for receiving the second connecting portion 11. Such a circular-housing 12 has, in a cross section according to a plane containing the axis 13, an "L"-shaped profile, and is defined by a cylindrical-housing-surface 14, extending parallel to the axis 13, and by a crown-seat-surface 15 lying transversely to the cylindrical-housing-surface 14. A fillet-radius 30 is adequately performed between the cylindrical- housing-surface 14 and the crown-seat-surface 15 in order to prevent local mechanical stress concentrations.

The crown-seat-surface 15 is provided on a flange-portion 19 of the hub-body 4, protruding radially with respect to the cylindrical-housing-surface 14.

On the second connecting portion 11 there is obtained a collar-coupling-portion 16 configured for coupling with the above-mentioned circular-housing 12.

The collar-coupling-portion 16 comprises a cylindrical-coupling-surface 17 adapted for resting against the cylindrical-housing-surface 14 of the hub-body 4 for achieving a proper coaxial placement of the impeller-body 6 relative to the hub-body 4. The collar-coupling-portion 16 further comprises a crown-coupling-surface 18 adapted for resting against the crown-seat-surface 15 thus achieving a proper axial placement of the impeller-body 6 relative to the hub-body 4.

The impeller-body 6 is shrunk on the hub-body 4 through a mechanical interference having a maximum value of about 100 µm and a minimum value of about 62 µm. However, other different values of mechanical interference can be chosen according to the overall dimensions of hub-body 4 and of the impeller-body 6 and possibly in function of other geometrical and operative parameters. In other words, the impeller-body 6, before being fitted on the hub-body 4 by shrink fit, is provided with a central bore having a diameter which is less than the diameter of the cylindrical-housing-surface 14 in such a way the above-mentioned mechanical interference values are achieved.

Analogously, the hub-body 4, before being fitted on the shaft 5 by shrink fit, is provided with a respective central bore having a diameter which is less than the external diameter of the housing of the shaft 5 intended to receive the hub-body 4.

The hub-body 4 is shrunk-on the shaft 5 with a mechanical interference having a maximum value of about 48 µm and a minimum value of about 18 µm. Analogously to the hub-impeller interference, other different values of mechanical interference can be chosen for the shrinking-on-coupling of the hub-body 4 with the shaft 5, according to the overall dimensions of hub-body 4, of the shaft 5 and in function of other possible geometrical and operative requirements/ parameters.

Owing to this new configuration, no screw-elements, nuts, or other separate fixing means are required for the reciprocal coupling of the impeller-body 6 with the hub-body 4, differently from the prior art fan-assemblies in which such fixing element may be subjected to breakages or loosening the constrain conditions which cause noise, vibrations and in general malfunction. Advantageously, due to the absence of bolts, also mechanical stress concentrations are avoided in the fan-assembly 1 whose fatigue strength is improved as well.

Owing to the absence of screws or bolts or other fixing means, the flange-portion 19 of the hub-body 4 is aerodynamically configured in an optimised manner, which does not block at all the ventilation-air, but, on the contrary, guides and promotes a correct flowing thereof. The flange-portion 19 comprises a regular and continuous front-surface 20 which is arranged opposite the crown-seat-surface 15 and which joins air-deviating-surfaces 21 of the blades 8. The front-surface 20 has a uniformly smooth and taper profile which is flush with the air-deviating-surfaces 21 thus conferring the hub-body 4 a front-shape which aerodynamically promotes interception, deviation, and conveying of the air-flow 24. Due to the particular configuration of the fan assembly 1, in particular of the connecting means 9, (defined by the first 10 and second 11 connecting portions) which imply the absence of bolts, nuts, screws or other distinct fixing elements, improved aerodynamic performances and higher mechanical fatigue and dynamic load resistances are achieved.

A protective-paste-coat can be interposed between the first connecting portion 10 and the second connecting portion 11 for preventing corrosive actions due to electrical potential difference between the two dissimilar metal materials which are in mutual contact.

The solution according to the invention proves to be mechanically and aerodynamically more effective and reliable compared with the prior art fan assemblies having fixing bolts. The present solution above described proves to be provided with increased aerodynamics performances and a higher mechanical reliability also compared with a solution in which the impeller is welded to the hub, since the welding joint-zones in such a solution show some mechanical integrity problems in particular when are heavily thermally stressed.

It has been surprisingly founded that with the chosen materials above described, having different respective thermal-expansion-parameters, in combination with the geometrical and dimensional configuration of the impeller body 6 and of the hub body 4, and in special way, of the first 10 and second 11 connecting portions, an extremely strong, stable and reliable mechanical coupling among the fan-assembly components is achieved.

The new advantageous geometrical and dimensional configuration of the impeller body 6 and of the hub body 4, and particularly, of the first connecting portion 10 and of the second connecting portion, together with a careful selection of the two specific different materials for the impeller body 6 and for the hub-body 4 respectively, ensure a firm, lasting and reliable mechanical coupling which is able to allow to successfully cope with heavy dynamic stress and thermal dilatations. The fan-assembly 1 of the invention proves to be a cheaper and more reliable technical solution compared with the prior art fan assemblies. Owing to the shrink fit-coupling configuration, a very high reduction of parts mechanically interconnected is achieved, which means a general increase of the reliability and mechanical resistance properties.

It is evident, from the above description, that the fan-assembly 1 appears as a more structurally simple, reliable high performance solution with respect to the known fan assemblies .

The fan-assembly 1, owing to the above described configuration, is advantageously faster to assemble and fit and easier to maintain compared with the prior art systems.

The fan-assembly 1 is susceptible of modifications or variations all within the scope of the inventive concept as defined by the appended claims; any details may be replaced with technically equivalent elements.

One or more of the elements above described may be differently shaped and/or positioned, etcetera.

The materials, so long as they are compatible with the specific use, as well as the individual components, may be any according to the requirements and the state of the art.

## Claims

1. Fan-assembly for an air-ventilation-device (2) of a traction-motor (3) comprising:
- a hub-body (4) suitable for being shrunk on a shaft (5) of said traction-motor (3);
- an impeller-body (6) having an inner part (7) which is adapted to be connected to said hub-body (4) and blade portions (8) protruding from said inner part (7),
- connecting means (9) for connecting said impeller-body (6) to said hub-body (4)
**CHARACTERISED IN THAT**
said connecting means (9) are defined by a first connecting portion (10) integrally obtained on said hub-body (4) and a second connecting portion (11) integrally obtained on said impeller-body (6), said first connecting portion (10) and said second connecting portion (11) being configured for mutually coupling through mechanical interference.

2. Fan-assembly according to claim 1, wherein said first connecting portion (10) is made of a first material and second connecting portion (11) is made of a second material different from said first material, said first material having a first thermal-expansion-coefficient value (V1) lower than a second thermal-expansion-coefficient value (V2) of said second material.

3. Fan-assembly according to claim 1 or 2, wherein said first material has a first thermal-expansion-coefficient value (V1) greater than a third thermal-expansion-coefficient value (V3) of a third material which said shaft (5) is made of.

4. Fan-assembly according to any one of the preceding claims, wherein said first connecting portion (10) and said second connecting portion (11) are configured for establishing a shrinking-on-coupling of said impeller-body (6) with said hub-body (4).

5. Fan-assembly according to any one of the preceding claims, wherein on said first connecting portion (10) there is obtained a circular-housing (12) extending around an axis (13) of said hub-body (4) for receiving said second connecting portion (11), said circular- housing (12) having, in a cross section according to a plane containing said axis (13), an "L"-shaped profile, said circular-housing (12) being defined by a cylindrical-housing-surface (14), extending parallel to said axis (13), and by a crown-seat-surface (15) lying transversely to said cylindrical-housing-surface (14), said crown-seat-surface (15) being provided on a flange-portion (19) of said hub-body (4), protruding radially with respect to said cylindrical-housing-surface (14).

6. Fan-assembly according to claim 4, wherein on said second connecting portion (11) there is obtained a collar-coupling-portion (16) configured for coupling with said circular-housing (12), said collar-coupling-portion (16) comprising a cylindrical-coupling-surface (17) adapted for resting against said cylindrical- housing-surface (14) for achieving a coaxial placement of said impeller-body (6) relative to said hub-body (4), and a crown-coupling-surface (18), adapted for resting against said crown-seat-surface (15) thus achieving an axial placement of said impeller-body (6) relative to said hub-body (4).

7. Fan-assembly according to claim 4 or 5, wherein said flange-portion (19) comprises, opposite said crown-seat-surface (15), a regular and continuous front-surface (20) which joins air-deviating-surfaces (21) of said blade portions, said regular and continuous front-surface (20) having a uniformly smooth and taper profile which is flush with said air-deviating-surfaces (21) thus conferring said hub-body (4) a front-shape which aerodynamically promotes interception, deviation, and conveying of the air-flow.

8. Fan-assembly according to any one of the preceding claims, wherein said hub-body (4) and said impeller-body (6) are made of respective different metal-materials, wherein a protective-paste-coat is interposed between said first connecting portion (10) and said second connecting portion (11) for preventing corrosive actions due to any electrical potential difference between the two dissimilar metal materials.

9. Fan-assembly according to any one of the preceding claims, wherein said impeller-body comprises an aluminium alloy-casting-impeller (6) and said hub-body (4) is made of corrosion resistant steel.

10. Fan-assembly according to any one of the preceding claims, wherein said hub-body (4) is made of X1NiCrMoCu25-20-5 corrosion resistant steel with said first thermal-expansion-coefficient value (V1) ranging from about 15 [10-6/°K] to about 18 [10-6/°K] according to the temperature-operative-conditions, said impeller-body (6) is made of ALSi9MnMg aluminium alloy with said second thermal-expansion-coefficient value (V2) ranging from about 20 [10-6/°K] to about 23 [10-6/°K] according to the temperature-operative-conditions.

11. Fan-assembly according to any one of the preceding claims, wherein the coupling-contact of said impeller-body (6) with said hub-body (4) is established with a mechanical interference having a maximum value of about 100 µm and a minimum value of about 62 µm.

12. Fan-assembly according to any one of the preceding, including said shaft (5) which is made of 42CrMo4 steel, and having a third thermal-expansion-coefficient value (V3) ranging from about 11 [10-6/°K] to about 14 [10-6/°K] according to the temperature-operative-conditions.

13. Fan-assembly according to any one of the preceding, wherein said hub-body (4) is shrunk-on said shaft (5) with a mechanical interference having a maximum value of about 48 µm and a minimum value of about 18 µm.

14. Air-ventilation-device (2) comprising a fan assembly (1) according to any one of the preceding claims.

15. Traction-motor (3) comprising an air-ventilation-device (2) according to claim 14.
